(19)

Europäisches
Patentamt

European
Patent Office

Office européen
des brevets

(11) **EP 2 692 738 A1**

(12) **EUROPEAN PATENT APPLICATION**
published in accordance with Art. 153(4) EPC

(43) Date of publication:
**05.02.2014 Bulletin 2014/06**

(21) Application number: **12764362.5**

(22) Date of filing: **19.03.2012**

(51) Int Cl.:
**C08B 3/12** (2006.01)

(86) International application number:
**PCT/JP2012/057056**

(87) International publication number:
**WO 2012/133003 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2011 JP 2011074046**

(71) Applicants:
• **Riken
Saitama 351-0198 (JP)**
• **Toray Industries, Inc.
Tokyo, 103-8666 (JP)**

(72) Inventors:
• **KANO, Hidekazu
Mishima-shi, Shizuoka 411-8652 (JP)**
• **ITO, Yukishige
Wako-shi, Saitama 351-0198 (JP)**
• **ARANISHI, Yoshitaka
Mishima-shi, Shizuoka 411-8652 (JP)**

(74) Representative: **Webster, Jeremy Mark et al
Mewburn Ellis LLP
33 Gutter Lane
London
EC2V 8AS (GB)**

(54) **ESTER COMPOUND OF CELLULOSE DERIVATIVE AND MANUFACTURING METHOD FOR SAME**

(57)     The present invention provides a method for manufacturing an ester compound of a cellulose derivative, which suppresses a reduction in the degree of polymerization, and an ester compound of a cellulose derivative obtained from the manufacturing method, which has excellent thermal flowability during molding and color tonality. This method manufactures an ester compound of a cellulose derivative by esterification of a cellulose derivative in a mixture comprising an ionic liquid, a cellulose derivative, and an esterification agent, said method being characterized by the use of at least one type of esterification agent selected from the group consisting of carboxylic acid anhydride, carboxylic acid halide, and carboxylic acid.

EP 2 692 738 A1

**Description**

Technical Field

The present invention relates to a manufacturing method for an esterification product of a cellulose derivative and any esterification product of a cellulose derivative obtained using the same manufacturing method. More specifically, it relates to a method to manufacture an esterification product of a cellulose derivative with only a inhibited reduction in the degree of polymerization and any esterification product of a cellulose derivative that is excellent in thermal flowability during molding and color tone as obtained using such a manufacturing method.

Background Art

As well as being the form of biomass produced in the largest quantity on earth, cellulose is biodegradable in the natural environment, and has therefore been utilized to produce cellulose-based materials since early times. In particular, cellulose acetate and other cellulose esters have been applied in wide ranging fields, such as fiber, film, plastics, and cigarette filters. Cellulose ethers, on the other hand, are widely used as additives in foods, drugs, cosmetics, detergents and other products.

Cellulose derivatives, such as cellulose esters and cellulose ethers, can be obtained by derivatizing the three hydroxyl groups present in glucose, which is the building block of cellulose, into ester groups, ether groups and other functional groups. Generally speaking, a cellulose ester is industrially synthesized by esterifying cellulose and an esterifying agent in an acetic acid solvent in the presence of a sulfuric acid catalyst (non-patent document 1). Since cellulose does not dissolve in acetic acid as a solvent, reaction initially progresses in a solid-liquid heterogeneous medium, but, once the degree of substitution of the cellulose ester reaches 3 in the course of the reaction, cellulose begins to dissolve in acetic acid, allowing the reaction to progress in a homogeneous medium halfway through it. Here, the degree of substitution means the number of substituent groups bonded to the three hydroxyl groups present in glucose, which is the building block of cellulose.

Generally speaking, chemical reaction is easier to control in a homogeneous medium than a heterogeneous medium, so that various proposals have been put forward as to a solvent that dissolves cellulose. Since cellulose features strong intra- and intermolecular hydrogen bonds formed by numerous hydroxyl groups present in its molecular structure, it is insoluble in water or a general organic solvent. Though solvents capable of dissolving cellulose are available, including an aqueous cuprammonium solution, sodium hydroxide-carbon bisulfide, lithium chloride/dimethyl acetamide and formaldehyde/dimethyl sulfoxide, their use has been limited because of the care required in their handling due to high toxicity, risk of explosion, or a need for derivatization of cellulose before dissolving in these solvents.

In recent years, an ionic liquid has been proposed as a new type of solvent capable of dissolving cellulose (patent document 1). Since ionic liquids are nonvolatile, they are easy to handle, while being capable of dissolving cellulose without derivatization. A method to synthesize a cellulose derivative by having an esterifying agent or etherifying agent act on cellulose that has been dissolved in an ionic liquid has also been proposed (non-patent document 2 and patent document 2). However, since cellulose experiences a reduction in the degree of polymerization when dissolving in an ionic liquid, the degree of polymerization of a cellulose derivative obtained through derivatization is low. Here, the degree of polymerization means the number of glucose molecules linearly bonded as building blocks of cellulose. When the degree of polymerization of a cellulose derivative is low, mechanical characteristics are low, giving rise to a shortcoming of being difficult to handle during molding into fiber or film. In addition, thermal decomposition or the like during molding leads to a defect in the molding in the form of a yellowish color tone.

As can be seen from the above, a method to manufacture an esterification product of a cellulose derivative with only a inhibited reduction in the degree of polymerization or an esterification product of a cellulose derivative that is excellent in thermal flowability during molding and color tone has not yet been proposed.

Prior Art Documents

Patent Documents

Patent document 1: International Publication No. WO 2003/029329
Patent document 2: Japanese Unexamined Patent Publication (Kokai) No. 2008-266625, Official Gazette

Non-patent Documents

Non-patent document 1: "Acetic Acid Fiber - Its Manufacture and Utilization", published on May 10, 1953 by Maruzen Co., Ltd.
Non-patent document 2: Macromol. Biosci., Vol. 5, p.p. 520-525 (2005)

Summary of the Invention

Problems to Be Solved by the Invention

The object of the present invention is to solve the problems in prior art as identified above and provide a method to manufacture an esterification product of a cellulose derivative with only a inhibited reduction in the degree of polymerization and an esterification product of a cellulose derivative that is excellent in thermal flowability during molding and color tone as obtained using such a manufacturing method.

Means of Solving the Problems

The manufacturing method for an esterification product of a cellulose derivative proposed under the present invention to solve the above problems is designed to manufacture an esterification product of a cellulose derivative characterized by comprising esterification of a cellulose derivative in a mixture of an ionic liquid, cellulose derivative and esterifying agent that is at least one esterifying agent selected from a set consisting of carboxylic anhydride, carboxylic acid halide and carboxylic acid.
It is preferable that the cellulose derivative be a cellulose ester, and, of all cellulose esters, cellulose acetate is particularly preferable.
The esterifying agent may advantageously be chosen from acetic anhydride, propionic anhydride and butyric anhydride. In addition, a cation that forms part of the ionic liquid may preferably be an imidazolium cation or pyridinium cation, while an anion that forms part of the ionic liquid may preferably be a halogen anion or carboxylic acid anion.
An esterification product of a cellulose derivative as proposed under the present invention to solve the above problems is manufactured using the above manufacturing method and satisfies inequality (I) below, where DP(A) and DP(B) are the weight-average degree of polymerization of the cellulose derivative and the esterification product of a cellulose derivative, respectively.

$$(DP(A) - DP(B))/DP(A) \times 100 \leq 20 \quad (I)$$

Furthermore, it is preferable that the esterification product of a cellulose derivative be cellulose acetate propionate or cellulose acetate butyrate.

Advantageous Effect of the Invention

The manufacturing method for an esterification product of a cellulose derivative proposed under the present invention makes it possible to produce an esterification product of a cellulose derivative with only a inhibited reduction in the degree of polymerization. Likewise, the esterification product of a cellulose derivative obtained using this manufacturing method excels in thermal flowability during molding and color tone. Such an esterification product of a cellulose derivative may therefore be preferably used in wide ranging fields, such as fiber, film and plastics.

Description of Embodiments

A cellulose derivative of the present invention is a cellulose-based compound in which at least one of the three hydroxyl groups present in glucose, which is the building block of cellulose, has been derivatized into one or more other functional groups. An esterification product of a cellulose derivative can be obtained by esterifying the hydroxyl groups that still remain in a cellulose derivative of the present invention.
Specific examples of a cellulose derivative include a cellulose ester, cellulose ether, cellulose ether ester, halodeoxy cellulose, and cello-uronic acid, though they are not limited thereto.
Cellulose esters are classified into cellulose monoesters, in which one type of ester group is bonded to cellulose, and cellulose mixed esters, in which two or more types of ester groups are bonded to cellulose. Specific examples of a cellulose monoester include cellulose acetate, cellulose propionate, cellulose butyrate, cellulose valerate, and cellulose stearate, while specific examples of a cellulose mixed ester include cellulose acetate propionate, cellulose acetate butyrate, cellulose acetate valerate, cellulose acetate caproate, cellulose propionate butyrate, and cellulose acetate propionate butyrate. These lists are not meant to be exhaustive, however. Of the above esters, cellulose acetate, cellulose propionate, cellulose acetate propionate and cellulose acetate butyrate may be preferably used as they are excellent in thermal flowability and mechanical characteristics.

Cellulose ethers are classified into cellulose monoethers, in which one type of ether group is bonded to cellulose, and cellulose mixed ethers, in which two or more types of ether groups are bonded to cellulose. Specific examples of a cellulose monoether include methyl cellulose, ethyl cellulose, propyl cellulose, hydroxymethyl cellulose, hydroxyethyl cellulose, hydroxypropyl cellulose, and carboxymethyl cellulose, while specific examples of a cellulose mixed ether include methyl ethyl cellulose, methyl propyl cellulose, ethyl propyl cellulose, hydroxymethyl methyl cellulose, hydroxymethyl ethyl cellulose, hydroxypropyl methyl cellulose, hydroxyethyl methyl cellulose, and hydroxypropyl methyl cellulose. These lists are not meant to be exhaustive, however.

A cellulose ether ester is a cellulose derivative in which one (or two or more) type(s) each of ether group(s) and ester group(s) are bonded to cellulose. Specific examples of a cellulose ether ester include methyl cellulose acetate, methyl cellulose propionate, ethyl cellulose acetate, ethyl cellulose propionate, propyl cellulose acetate, propyl cellulose propionate, hydroxymethyl cellulose acetate, hydroxymethyl cellulose propionate, hydroxyethyl cellulose acetate, hydroxyethyl cellulose propionate, hydroxypropyl cellulose acetate, hydroxypropyl cellulose propionate, carboxymethyl cellulose acetate, and  carboxymethyl cellulose propionate, though they are not limited thereto.

Specific examples of a halodeoxy cellulose include chlorodeoxy cellulose, bromodeoxy cellulose, and iododeoxy cellulose, though they are not limited thereto.

Though the total degree of substitution of a cellulose derivative of the present invention may be chosen as appropriate according to the intended use of the esterification product of a cellulose derivative to be obtained through an esterification of a cellulose derivative, it is preferable that it be 0.3 to 2.9. The total degree of substitution means the sum total of the average degree of substitution of all substituent groups bonded to the three hydroxyl groups present in glucose, which is the building block of cellulose. If the total degree of substitution of the cellulose derivative is 0.3 or more as preferred, it is possible to inhibit the reduction in the degree of polymerization when synthesizing an esterification product of a cellulose derivative by esterifying a cellulose derivative. In fact, the total degree of substitution of the cellulose derivative may be more preferably 0.5 or more and even more preferably 1.0 or more. If, on the other hand, the total degree of substitution of the cellulose derivative is 2.9 or less as preferred, it is possible to change the properties of the cellulose derivative through an esterification of the hydroxyl groups that still remain in the cellulose derivative. In fact, the total degree of substitution of the cellulose derivative may be more preferably 2.7 or less and even more preferably 2.5 or less.

Though the weight-average degree of polymerization of a cellulose derivative of the present invention may be chosen as appropriate according to the intended use of the esterification product of a cellulose derivative to be obtained through an esterification of a cellulose derivative, it is preferable that it be 100 to 2000. The weight-average degree of polymerization means the value calculated by dividing the weight-average molecular weight of the cellulose derivative by the molecular weight per glucose unit as the building block of cellulose. If the weight-average degree of polymerization of the cellulose derivative is 100 or more as preferred, the esterification product of a cellulose derivative obtained by esterifying the cellulose derivative has good thermal flowability and mechanical characteristics. The weight-average degree of polymerization of the cellulose derivative may be more preferably 200 or more and even more preferably 300 or more. If, on the other hand, the weight-average degree of polymerization of the cellulose derivative is 2000 or less as preferred, the viscosity of the reaction solution does not become too high when synthesizing an esterification product of a cellulose derivative by esterifying the cellulose derivative, thus ensuring good ease of handling. In fact, the weight-average degree of polymerization of the cellulose derivative may be more preferably 1700 or less and even  more preferably 1500 or less.

The cellulose used as raw material for a cellulose derivative of the present invention may be of any origin, including plant, such as wood, cotton, hemp, flax, ramie, jute or kenaf, animal, such as ascidian, algal, such as seaweed, and microbial, such as acetobacter. Of them, refined pulp, regenerated cellulose, cotton linter or cotton lint obtained from cotton, and bacterial cellulose obtained from acetobacter may be preferably used because of their high cellulose purity. It is preferable that α cellulose content, an indicator of cellulose purity, be 90 wt% or more. If α cellulose content is 90 wt% or more as preferred, the obtained cellulose derivative and esterification product of a cellulose derivative have good thermal flowability, mechanical characteristics and color tone as side reactions, such as a reduction in the degree of polymerization, and a coloring of the reaction mixture can be limited when synthesizing a cellulose derivative through a derivatizaton of a cellulose or when synthesizing an esterification product of a cellulose derivative through an esterification of a cellulose derivative. In fact, α cellulose content may be more preferably 92 wt% or more and even more preferably 95 wt% or more.

Under the present invention, the cellulose used as raw material for a cellulose derivative and the cellulose derivative used as raw material for an esterification product of a cellulose derivative are subject to no restrictions in terms of form, so that they can be of any form, such as powder, particulate, lint, thread, cloth, paper, sheet or film. Pulverization or other treatment may also be provided. Pulverization methods include a dry mill, such as a ball mill, though they are not limited thereto. Pulverization treatment is advantageous as it increases the surface area of the raw material and thus improves reactivity when derivatizing cellulose or esterifying a cellulose derivative.

An ionic liquid of the present invention is a compound consisting of a cation and an anion.

Examples of a cation that forms part of an ionic liquid include a compound formed as proton, alkyl group or the like bond to nitrogen atom such as imidazole, pyridine, ammonia, pyrroline, pyrazole, carbazole, indole, lutidine, pyrrole, pyrazole, piperidine, pyrrolidine, 1,8-diazabicyclo[5.4.0]undec-7-ene, 1,5-diazabicyclo[4.3.0]-5-nonene or the like and any derivatives thereof; a compound formed as proton, alkyl group or the like bond to sulfur atom such as a sulfide or the like and any derivatives thereof; and a compound formed as proton, alkyl group or the like bond to phosphorus atom of phosphine or the like and any derivatives thereof. These lists are not meant to be exhaustive, however. A cation that forms part of an ionic liquid may contain two or more heteroatoms, such as nitrogen, sulfur, phosphorus and oxygen. Of all cations, an imidazolium cation or a pyridinium cation, which contains imidazole or pyridine in their respective backbones, may be preferably used as they have excellent affinity for a cellulose derivative.

Specific examples of a cation that forms part of an ionic liquid include 1,3-dimethyl imidazolium, 1-ethyl-3-methyl imidazolium, 1-butyl-3-methyl imidazolium, 1-hexyl-3-methyl imidazolium, 1-octyl-3-methyl imidazolium, 1-decyl-3-methyl imidazolium, 1-tetradecyl-3-methyl imidazolium, 1-hexadecyl-3-methyl imidazolium, 1-octadecyl-3-methyl imidazolium, 1-allyl-3-methyl imidazolium, 1-ethyl- 2,3-dimethyl imidazolium, 1-butyl-2,3-dimethyl imidazolium, 1-hexyl-2,3-dimethyl imidazolium, 1-ethyl pyridinium, 1-butyl pyridinium, 1-hexyl pyridinium, 1-butyl-4-methyl pyridinium, 1-butyl-3-methyl pyridinium, 1-hexyl-4-methyl pyridinium, 1-hexyl-3-methyl pyridinium, 1-octyl-4-methyl pyridinium, 1-octyl-3-methyl pyridinium, 1-butyl-3,4-dimethyl pyridinium, 1-butyl-3,5-dimethyl pyridinium, trimethyl propyl ammonium, and methyl propyl piperidinium, though they are not limited thereto.

Examples of an anion that forms part of an ionic liquid include a halogen anion, pseudohalogen anion, carboxylic acid anion, superacid anion, sulfonate anion, and phosphate anion, though they are not limited thereto. Of them, a halogen anion, carboxylic acid anion and phosphoric acid anion may be preferably used as they have excellent affinity for a cellulose derivative.

Examples of a halogen anion include a fluorine anion, chlorine anion, bromine anion, and iodine anion.

Examples of a pseudohalogen anion include a cyanide anion, thiocyanate anion, cyanate anion, fulminate anion and azide anion, though they are not limited thereto.

Examples of a carboxylic acid anion include a monocarboxylic acid anion or dicarboxylic acid anion with a carbon number of 1 to 18, though they are not limited thereto. Specific examples of carboxylic acid anion include a formate anion, acetate anion, propionate anion, butyrate anion, valerate anion, fumarate anion, oxalate anion, lactate anion, and pyruvate anion, though they are not limited thereto.

Examples of a superacid anion include a fluoroborate anion, tetrafluoroborate anion, perchlorate anion, hexafluorophosphate anion, hexafluoroantimonate anion, and hexafluoroarsenate anion, though they are not limited thereto.

Examples of a sulfonate anion include a sulfonic acid with a carbon number of 1 to 26, though they are not limited thereto. Specific examples of a sulfonate anion include a methanesulfonate anion, p-toluenesulfonate anion, octylbenzene sulfonate anion, dodecylbenzene sulfonate anion, laurylbenzene sulfonate anion, octadecylbenzene sulfonate anion, eicosylbenzene sulfonate anion, octanesulfonate anion, dodecanesulfonate anion, and eicosanesulfonate anion, though they are not limited thereto.

Examples of a phosphate anion include a phosphoric acid anion and a phosphate anion with a carbon number of 1 to 40, though they are not limited thereto. Specific examples of a phosphate anion include a phosphoric acid anion, methyl phosphate anion, octyl phosphate anion, dioctyl phosphate anion, lauryl phosphate anion, dilauryl phosphate anion, stearyl phosphate anion, distearyl phosphatephosphoric acid diester anion, eicosyl anion, and dieicosyl phosphate anion, though they are not limited thereto.

Various ionic liquids can be obtained by combining such cations and anions. Specific examples of an ionic liquid include 1,3-dimethyl imidazolium methyl sulfate, 1-ethyl-3-methyl imidazolium chloride, 1-ethyl-3-methyl imidazolium bromide, 1-ethyl-3-methyl imidazolium acetate, 1-ethyl-3-methyl imidazolium methanesulfonate, 1-butyl-3-methyl imidazolium chloride, 1-butyl-3-methyl imidazolium acetate, 1-hexyl-3-methyl imidazolium hexafluorophosphate, 1-octyl-3-methyl imidazolium tetrafluoroborate, 1-decyl-3-methyl imidazolium chloride, 1-tetradecyl-3-methyl imidazolium chloride, 1-allyl-3-methyl imidazolium chloride, 1-ethyl-2,3-dimethyl imidazolium chloride, 1-butyl-2,3-dimethyl imidazolium trifluoromethanesulfonate, 1-hexyl-2,3-dimethyl imidazolium chloride, 1-ethyl pyridinium bromide, 1-butyl pyridinium bromide, 1-butyl-3-methyl pyridinium chloride, 1-butyl pyridinium hexafluorophosphate, 1-hexyl pyridinium hexafluorophosphate, 1-butyl-4-methyl pyridinium tetrafluoroborate, 3,5-dimethylbutyl pyridinium chloride, 1-butyl-3-methyl imidazolium tetrachloroaluminate, 1-butyl-3-methyl imidazolium hexafluorophosphate, 1-ethyl-3-methyl imidazolium trifluoromethanesulfonate, 1-butyl pyridinium nitrate, dimethylmethyl-2-methoxyethyl ammonium tetrafluoroborate, dimethylmethyl-2-methoxyethyl ammonium bis(trifluoromethane sulfonyl)imide, trimethylpropyl ammonium bis(trifluoro methanesulfonyl) imide, and methylpropyl piperidinium bis(trifluoromethane sulfonyl)imide, though they are not limited thereto. Of them, 1-ethyl-3-methyl imidazolium acetate and 1-butyl-3-methyl imidazolium chloride may be preferably used as they have excellent affinity for a cellulose derivative.

It is preferable that the melting point of the ionic liquid be 10 to 100°C though there are no specific restrictions on it as long as it is not more than the reaction temperature during the esterification of a cellulose derivative. If the melting point of the ionic liquid is 10°C or more as preferred, the liquid remains, for instance, at room temperature (25°C), ensuring good ease of handling. In fact, the melting point of the ionic liquid may be more preferably 15°C or more and even more preferably 20°C or more. If, on the other hand, the melting point of the ionic liquid is 100°C or less as preferred, the reduction in the degree of polymerization due to heat decomposition and the coloring of the reaction mixture due to side reactions can be limited when the cellulose derivative is esterified. In fact, the melting point of the ionic liquid may be more preferably 80°C or less and even more preferably 70°C or less.

Under the present invention, ionic liquids may be used singly or in combination of two or more.

Under the present invention, an organic solvent may be used in combination with an ionic liquid. The organic solvent can be selected as appropriate according to compatibility with the ionic liquid, affinity with the cellulose derivative and the esterification product thereof, the viscosity of the reaction solution, and the like. Specific examples of an organic solvent include dimethyl sulfoxide, N,N-dimethyl formamide, N,N-dimethyl acetamide, 1-methyl-2-pyrolidone, pyridine, and acetonitrile, though they are not limited thereto. With ionic liquids, organic solvents may be used singly or in combination of two or more.

The esterifying agent of the present invention may be a compound or compounds chosen from a carboxylic anhydride, carboxylic acid halide and carboxylic acid, singly or in combination of two or more. In this regard, an esterifying agent designed to introduce the same ester group as the one bonded to the cellulose derivative may be used.

Specific examples of a carboxylic anhydride include acetic anhydride, propionic anhydride, butyric anhydride, valeric anhydride, caproic anhydride, enanthic anhydride, caprylic anhydride, pelargonic anhydride, capric anhydride, lauric anhydride, myristic anhydride, palmitic anhydride, stearic anhydride, oleic anhydride, linoleic anhydride, linolenic anhydride, benzoic anhydride, phthalic anhydride, maleic anhydride, and succinic anhydride, though they are not limited thereto. Of them, acetic anhydride, propionic anhydride and butyric anhydride may be preferably used for their high reactivity.

Examples of a carboxylic halide include a carboxylic acid fluoride, carboxylic acid chloride, carboxylic acid bromide, and carboxylic acid iodide. Specific examples of a carboxylic acid halide include acetyl fluoride, acetyl chloride, acetyl bromide, acetyl iodide, propionyl fluoride, propionyl chloride, propionyl bromide, propionyl iodide, butyryl fluoride, butyryl chloride, butyryl bromide, butyryl iodide, benzoyl fluoride, benzoyl chloride, benzoyl bromide, and benzoyl iodide, though they are not limited thereto. Of them, a carboxylic acid chloride may be preferably used from the viewpoint of reactivity and ease of handling.

Specific examples of a carboxylic acid include acetic acid, propionic acid, butyric acid, valeric acid, caproic acid, enanthic acid, caprylic acid, pelargonic acid, capric acid, lauric acid, myristic acid, palmitic acid, stearic acid, oleic acid, linoleic acid, linolenic acid, benzoic acid, phthalic acid, maleic acid, and succinic acid, though they are not limited thereto. Of them, acetic acid, propionic acid and butyric acid may be preferably used for their high reactivity.

Under the present invention, a catalyst may be used to promote the esterification of the cellulose derivative. Specific examples of a catalyst include sulfuric acid, hydrochloric acid, hydrobromic acid, perchloric acid, hypochlorous acid, nitric acid, and zinc chloride, though they are not limited thereto. Of them, sulfuric acid may be preferably used from the viewpoint of reactivity. Those catalysts may be used singly or in combination of two or more.

Next, the manufacturing method for an esterification product of a cellulose derivative proposed under the present invention is described.

An esterification product of a cellulose derivative of the present invention can be obtained through an esterifying reaction between a cellulose derivative and esterifying agent in a mixture of an ionic liquid, cellulose derivative and esterifying agent. With conventional methods that use a mixture of an ionic liquid, cellulose and esterifying agent, the degree of polymerization of the obtained cellulose ester is low as the esterification of cellulose is accompanied by a reduction in the degree of polymerization of cellulose. Cellulose is a natural polymer in which glucose molecules, the building blocks of cellulose, are bonded together in a straight line via glycosidic bonds. Since glycosidic bonds contained in cellulose are broken by the action of an acid or water, a reduction in the degree of polymerization of cellulose occurs. In contrast, a cellulose derivative, formed through the introduction of one or more ester or other functional groups into cellulose in place of one or more of its hydroxyl groups, enjoys more stable glycosidic bonds, making it less prone to a reduction in the degree of polymerization. Under the present invention, it is possible to inhibit the reduction in the degree of polymerization of the esterification product by esterifying a cellulose derivative.

The mixture of an ionic liquid, cellulose derivative and esterifying agent of the present invention may be prepared by simultaneously mixing the ionic liquid, cellulose derivative and esterifying agent or by first mixing any two components and then adding the third, followed by more mixing.

Under the present invention, it is preferable that the ionic liquid and cellulose derivative be vacuum or heat-dried in advance to lower their moisture content, preferably down to 3 wt% or less. If the moisture content is 3 wt% or less as preferred, it is possible to inhibit the reduction in the degree of polymerization due to a hydrolysis of the cellulose derivative and the consumption of the esterifying agent due to a hydrolysis of the esterifying agent. In fact, the moisture content may be more preferably 2 wt% or less and even more preferably 1 wt% or less.

Though the weight of the cellulose derivative relative to the weight of the ionic liquid may be chosen as appropriate, taking into account that the viscosity of the ionic liquid and its affinity for the cellulose derivative vary with the type of the ionic liquid, it is preferable that it be 1 to 40 wt%. If the weight of the cellulose derivative relative to the weight of the ionic liquid is 1 wt% or more as preferred, the reaction efficiency and economic efficiency are good. In fact, the weight of the cellulose derivative relative to the weight of the ionic liquid may be more preferably 3 wt% or more and even more preferably 5 wt% or more. If, on the other hand, the weight of the cellulose derivative relative to the weight of the ionic liquid is 40 wt% or less as preferred, it is possible to keep the viscosity of the reaction solution from becoming too high and ensure good ease of handling. In fact, the weight of the cellulose derivative relative to the weight of the ionic liquid may be more preferably 30 wt% or less and even more preferably 20 wt% or less.

Though the reaction temperature of esterification involving a mixture of an ionic liquid, cellulose derivative and esterifying agent may be chosen as appropriate according to the melting point of the ionic liquid, type and blended amount of the esterifying agent, type and blended amount of the catalyst and other reaction conditions, it is preferable that it be 30 to 100°C. If the reaction temperature is 30°C or more as preferred, it is possible to promote the esterification of the cellulose derivative. In fact, the reaction temperature may be more preferably 40°C or more and even more preferably 50°C or more. If, on the other hand, the reaction temperature is 100°C or less as preferred, it is possible to inhibit the reduction in the degree of polymerization of the cellulose derivative. In fact, the reaction temperature may be more preferably 90°C or less and even more preferably 80°C or less.

The reaction time of esterification involving a mixture of an ionic liquid, cellulose derivative and esterifying agent may be chosen as appropriate according to the reaction temperature, type of the ionic liquid, type and blended amount of the esterifying agent, type and blended amount of the catalyst and other reaction conditions, it is preferable that it be 0.5 to 10 hours. If the reaction time is 0.5 hours or more as preferred, it is possible to promote the esterification of the cellulose derivative. In fact, the reaction time may be more preferably 1 hour or more and even more preferably 2 hours or more. If, on the other hand, the reaction time is 10 hours or less as preferred, it is possible to inhibit the reduction in the degree of polymerization of the cellulose derivative. In fact, the reaction time may be more preferably 8 hours or less and even more preferably 5 hours or less.

The means of heating the mixture of an ionic liquid, cellulose derivative and esterifying agent may be any general means of heating based on a general known method, including, but not limited to, a water or oil bath, oven or microwave.

It is preferable that the mixture of an ionic liquid, cellulose derivative and esterifying agent be stirred during heating to promote the esterification of the cellulose derivative. The means of stirring may be a stirring bar or agitating blade as a mechanical means of stirring, a vibrating container, ultrasonic irradiation or the like according to a generally known method, though the list is not meant to be exhaustive.

Though the equivalent amount of the esterifying agent may be chosen as appropriate according to the type of the esterifying agent, reaction temperature and time of esterification and other reaction conditions, it is preferable that it be 1 to 3 eq relative to the equivalent amount of the hydroxyl groups that still remain in glucose as the building block of the cellulose derivative. In this regard, the esterification product of a cellulose derivative may be allowed to retain one or more hydroxyl groups by having only some of the hydroxyl groups that still remain in glucose as the building block of the cellulose derivative react with the esterifying agent. If the equivalent amount of the esterifying agent relative to the equivalent amount of the hydroxyl groups that still remain in glucose as the building block of the cellulose derivative is 1 eq or more as preferred, the cellulose derivative and esterifying agent react sufficiently. In fact, the equivalent amount of the esterifying agent relative to the equivalent amount of the hydroxyl groups that still remain in glucose as the building block of the cellulose derivative may be more preferably 1.2 eq or more and even more preferably 1.5 eq or more. If, on the other hand, the equivalent amount of the esterifying agent relative to the equivalent amount of the hydroxyl groups that still remain in glucose as the building block of the cellulose derivative is 3 eq or less as preferred, it is possible to elevate the concentration of the cellulose derivative in the reaction solution, while ensuring good economic efficiency. In fact, the equivalent amount of the esterifying agent relative to the equivalent amount of the hydroxyl groups that still remain in glucose as the building block of the cellulose derivative may be more preferably 2.8 eq or less and even more preferably 2.5 eq or less.

When adding a catalyst to promote the esterification of the cellulose derivative, it is preferable that the equivalent amount of the catalyst relative to the equivalent amount of the hydroxyl groups that still remain in glucose as the building block of the cellulose derivative be 0.001 to 0.3 eq. If the equivalent amount of the catalyst relative to the equivalent amount of the hydroxyl groups that still remain in glucose as the building block of the cellulose derivative is 0.001 eq or more as preferred, it is possible to promote the esterification of the cellulose derivative. In fact, the equivalent amount of the catalyst relative to the equivalent amount of the hydroxyl groups that still remain in glucose as the building block of the cellulose derivative may be more preferably 0.005 eq or more and even more preferably 0.01 eq or more. If, on the other hand, the equivalent amount of the catalyst relative to the equivalent amount of the hydroxyl groups that still remain in glucose as the building block of the cellulose derivative is 0.3 eq or less as preferred, it is possible to inhibit the reduction in the degree of polymerization of the cellulose derivative. In fact, the equivalent amount of the catalyst relative to the equivalent amount of the hydroxyl groups that still remain in glucose as the building block of the cellulose derivative may be more preferably 0.2 eq or less and even more preferably 0.1 eq or less.

An esterifying reaction between a cellulose derivative and esterifying agent can be stopped using a reaction terminating agent such as an alcohol, e.g. methanol or ethanol, or water. The role of the reaction terminating agent is to hydrolyze the excess amount of the esterifying agent, i.e. the portion that did not take part in the esterification of the cellulose derivative, and precipitate the esterification product of a cellulose derivative by insolubilizing it. The reaction terminating agent may be added to the reaction solution or, alternatively, the reaction solution may be added to the reaction terminating agent.

The precipitated esterification product of a cellulose derivative can be isolated using a generally known method, such as filtration or centrifugal separation. The isolated esterification product of a cellulose derivative may be cleansed one or more times using an alcohol, e.g. methanol or ethanol, or water, followed by vacuum drying or heat drying, as needed.

Next, the esterification product of a cellulose derivative obtained using the manufacturing method for an esterification product of a cellulose derivative proposed under the present invention is described.

Though the total degree of substitution of the esterification product of a cellulose derivative obtained under the present invention may be chosen as appropriate according to its intended use, it is preferable that it be 1.0 to 3.0. The total degree of substitution means the sum total of the average degrees of substitution of all substituent groups bonded to the three hydroxyl groups present in glucose, which is the building block of cellulose. If the total degree of substitution of the esterification product of a cellulose derivative is 1.0 or more as preferred, molding with solvent or heat is easier. In fact, the total degree of substitution of the esterification product of a cellulose derivative may be more preferably 1.5 or more and even more preferably 2.0 or more. If, on the other hand, the total degree of substitution of the esterification product of a cellulose derivative is 3.0 or less as preferred, thermal flowability and solubility in a solvent are good. In fact, the total degree of substitution of the esterification product of a cellulose derivative may be more preferably 2.9 or less and even more preferably 2.7 or less.

It is preferable that the weight-average molecular weight of the esterification product of a cellulose derivative obtained under the present invention be 50,000 to 250,000. If the weight-average molecular weight of the esterification product of a cellulose derivative is 50,000 or more as preferred, the molding has good strength, elastic modulus, heat resistance, etc. In fact, the weight-average molecular weight of the esterification product of a cellulose derivative may be more preferably 60,000 or more and even more preferably 80,000 or more. If, on the other hand, the weight-average molecular weight of the esterification product of a cellulose derivative is 250,000 or less as preferred, viscosity can be kept reasonably low during molding with solvent or heat, thus ensuring good ease of handling. In fact, the weight-average molecular weight of the esterification product of a cellulose derivative may be more preferably 220,000 or less and even more preferably 200,000 or less.

It is preferable that the weight-average degree of polymerization of the esterification product of a cellulose derivative obtained under the present invention be 100 to 2000. The weight-average degree of polymerization means the value calculated by dividing the weight-average molecular weight of the esterification product of a cellulose derivative by the molecular weight per glucose unit as the building block of cellulose. If the weight-average degree of polymerization of the esterification product of a cellulose derivative is 100 or more as preferred, the molding has good strength, elastic modulus, heat resistance, etc. In fact, the weight-average degree of polymerization of the esterification product of a cellulose derivative may be more preferably 200 or more and even more preferably 300 or more. If, on the other hand, the weight-average degree of polymerization of the esterification product of a cellulose derivative is 2000 or less as preferred, viscosity can be kept reasonably low during molding with solvent or heat, thus ensuring good ease of handling. In fact, the weight-average degree of polymerization of the esterification product of a cellulose derivative may be more preferably 1700 or less and even more preferably 1500 or less.

It is preferable that the esterification product of a cellulose derivative obtained under the present invention satisfy inequality (I) below, where DP(A) and DP(B) are the weight-average degree of polymerization of the cellulose derivative and the esterification product of a cellulose derivative, respectively.

$$(DP(A) - DP(B))/DP(A) \times 100 \leq 20 \quad (I)$$

If the lefthand side of inequality (I) as calculated from the weight-average degree of polymerization of the cellulose derivative and the esterification product of a cellulose derivative is 20 or less as preferred, the reduction in the degree of polymerization during esterification of the cellulose derivative is small, thus ensuring that the thermal flowability of the obtained esterification product of a cellulose derivative and the mechanical characteristics and color tone of the molding thereof are good. In fact, the lefthand side of inequality (I) may be more preferably 15 or less and even more preferably 10 or less.

Under the present invention, various esterification products of a cellulose derivative can be obtained by changing the combination of the cellulose derivative and esterifying agent. Specific examples of an esterification product of a cellulose derivative include cellulose acetate, cellulose propionate, cellulose butyrate, cellulose valerate, cellulose stearate, cellulose acetate propionate, cellulose acetate butyrate, cellulose acetate valerate, cellulose acetate caproate, cellulose acetate stearate, cellulose propionate butyrate, cellulose propionate valerate, cellulose butyrate valerate, cellulose acetate propionate butyrate, cellulose acetate butyrate valerate, methyl cellulose acetate, methyl cellulose propionate, methyl cellulose butyrate, methyl cellulose valerate, methyl cellulose stearate, ethyl cellulose acetate, ethyl cellulose propionate, ethyl cellulose butyrate, ethyl cellulose stearate, propyl cellulose acetate, propyl cellulose propionate, hydroxymethyl cellulose acetate, hydroxymethyl cellulose propionate, hydroxymethyl cellulose butyrate, hydroxyethyl cellulose acetate, hydroxyethyl cellulose propionate, hydroxypropyl cellulose acetate, hydroxypropyl cellulose propionate, carboxymethyl cellulose acetate, carboxymethyl cellulose propionate, carboxymethyl cellulose butyrate, hydroxyethyl methyl cellulose acetate, hydroxyethyl methyl cellulose propionate, hydroxyethyl methyl cellulose butyrate, hydroxypropyl methyl cellulose acetate, hydroxypropyl methyl cellulose propionate, hydroxypropyl methyl cellulose butyrate, chlorodeoxy cellulose acetate, chlorodeoxy cellulose propionate, chlorodeoxy cellulose butyrate, bromodeoxy cellulose acetate, bromodeoxy cellulose propionate, bromodeoxy cellulose butyrate, iododeoxy cellulose acetate, iododeoxy cellulose propionate, and iododeoxy cellulose butyrate, though they are not limited thereto. Of them, cellulose acetate, cellulose propionate, cellulose acetate propionate and cellulose acetate butyrate may be preferably used as they have excellent thermal flowability and mechanical characteristics.

The esterification product of a cellulose derivative obtained under the present invention may be subjected to various property modifications by adding secondary additives. Specific examples of a secondary additive include a plasticizer, ultraviolet absorber, infrared ray absorbent, fluorescent brightening agent, mold releasing agent, antibacterial agent, nucleating agent, antioxidant, antistatic agent, color protection agent, adjustor, delustering agent, antifoam agent, preservative agent, gelatinizer, latex, filler, ink, coloring agent, dye, pigment, and fragrance, though they are not limited thereto. Such secondary additives may be used singly or in combination of two or more. The esterification product of a cellulose derivative obtained under the present invention may be used after having the remaining hydroxyl groups react with another compound.

Since the esterification product of a cellulose derivative obtained under the present invention is excellent in thermal flowability during molding and color tone with only a inhibited reduction in the degree of polymerization, it can be utilized in wide ranging fields. Examples include the fiber field, encompassing, among other things, fibers, ropes, nets, woven or knit fabrics, felts, fleeces, fiber composite materials, flocs and waddings, the film field, encompassing, among other things, polarizing-plate protective films and optical films, and the plastics field, encompassing, among other things, medical tools, electronic parts materials, packaging materials, glass frames, pipes, rods, tools, tableware, and toys.

Examples

The present invention is described in more detail using examples below. Various characteristic values arising from those examples were obtained using the following methods:

A. Substituent group and average degree of substitution

A specimen for NMR measurement was prepared by fully dissolving a cellulose derivative or an esterification product of a cellulose derivative in deuterated dimethyl sulfoxide or deuterated chloroform to bring its concentration to 5 wt%. This specimen was subjected to $^1$H-NMR measurements, conducted using NMR equipment (DRX-500, manufactured by Bruker) under the conditions specified below, followed by the identification of the substituent groups from chemical shifts and a calculation of the average degrees of substitution of all substituent groups from integration results.
Resonant frequency: 500 MHz
Number of integrations: 64
Measurement temperature: 25°C (298K)

B. Total degree of substitution

The sum total of the average degrees of substitution of all substituent groups calculated in A above was taken as the total degree of substitution.

C. Molecular weight per glucose unit

Based on the average degree of substitution of each substituent group as calculated in A above, the molecular weight per glucose unit was calculated using the following formula: Molecular weight per glucose unit = 162.14 - 1.01 $\times$ 3.0 + Sum total of (Molecular weight of substituent group X $\times$ Average degree of substitution of substituent group X) + 1.01 $\times$ Average degree of substitution of remaining hydroxyl groups
162.14: Molecular weight of repeating cellulose unit
1.01: Atomic weight of hydrogen
3.0: Number of hydroxyl groups per glucose unit of cellulose

Molecular weight of substituent group X: Molecular weight of substituent group bonded to oxygen atom at position 2, 3, 6 of cellulose

Average degree of substitution of remaining hydroxyl group: 3.0 - Sum total of average degree of substitution of each substituent group

As an example, the calculation result for cellulose acetate propionate with the degree of substitution for the acetyl group of 1.5 and the degree of substitution for the propionyl group of 1.0 is shown below.

Molecular weight per glucose unit = 162.14 - 1.01 $\times$ 3.0 + 43 $\times$ 1.5 + 57 $\times$ 1.0 + 1.01 $\times$ (3.0 - 1.5 - 1.0) = 281.12

D. Weight-average molecular weight (Mw)

A specimen for GPC measurement was prepared by fully dissolving a cellulose derivative or an esterification product of a cellulose derivative in tetrahydrofuran or dimethyl sulfoxide to bring its concentration to 0.15 wt%. This specimen was subjected to GPC measurements, conducted using GPC equipment (Waters 2690, manufactured by Waters) under the conditions specified below, followed by a calculation of weight-average molecular weight (Mw) through polystyrene conversion in the case of the migration layer solvent being tetrahydrofuran and through pullulan conversion in the case of the migration layer solvent being dimethyl sulfoxide. Measurement was performed three times per specimen, and the average of the measurement results was taken as weight-average molecular weight (Mw). Column: TSK gel GMHHR-H (2 pieces joined), manufactured by Tosoh Corporation Detector: Waters 2410 differential refractometer RI
Migration layer solvent: Tetrahydrofuran or dimethyl sulfoxide
Reference material: Polystyrene or pullulan
Flow rate: 1.0 ml/min
Injection volume: 200 μl

E. Weight-average degree of polymerization

Using the molecular weight per glucose unit and the weight-average molecular weight calculated in C and D above, the weight-average degree of polymerization was calculated using the following formula.

Weight-average degree of polymerization = Weight-average molecular weight/Molecular weight per glucose unit

F. Reduction in degree of polymerization

After calculating the weight-average degree of polymerization of the cellulose derivative and that of the esterification product of a cellulose derivative, the reduction in the degree of polymerization (%) due to the esterifying reaction of the cellulose derivative was calculated using the following formula:

$$\text{Reduction in degree of polymerization} = (DP(A) - DP(B))/DP(A) \times 100$$

DP(A): Weight-average degree of polymerization of cellulose derivative
DP(B): Weight-average degree of polymerization of esterification product of cellulose derivative

Using the reduction in the degree of polymerization calculated via the above formula as an indicator for the inhibiting of the reduction in the degree of polymerization, the measurement result was rated as follows: less than 10% ◎, 10% or more and less than 20% ○, 20% or more and less than 30% Δ, and 30% or more ×. Of them, ◎ (less than 10%) and ○ (10% or more and less than 20%) were assessed as acceptable.

G. Thermal flowability

A sheet of film was prepared from 1g of an esterification product of a cellulose derivative by hot pressing for 1 minute at 2 MPa and 240°C after 4 hours of vacuum-drying at 80°C. The diameter (cm) of the sheet of film was then measured and the result was rated as follows: 7 cm or more and less than 8 cm ◎, 6cm or more and less than 7 cm or 8 cm or more and less than 9 cm ○, 5 cm or more and less than 6 cm or 9 cm or more and less than 10 cm Δ, and less than 5 cm or 10 cm or more ×. Of them, ◎ (7 cm or more and less than 8 cm) and ○ (6 cm or more and less than 7 cm or 8 cm or more and less than 9 cm) were assessed as acceptable.

H. Color tone

The sheet of film prepared in G above was subjected to measurement of YI (yellowness index) against a D65 light source using an SM color computer manufactured by Suga Test Instruments Co., Ltd. to evaluate the color tone. In more concrete terms, YI was calculated in accordance with JIS K7373: 2006 (Plastics - Determination of Yellowness Index and Change of Yellowness Index). The calculated YI value was graded as follows: less than 5 ◎, 5 or more and less than 10 ○, 10 or more and less than 15 Δ, and 15 or more ×. Of them, ◎ (less than 5) and ○ (5 or more and less than 10) were assessed as acceptable.

Synthesis example 1

Two hundred and fifty parts by weight of acetic acid was added to 100 parts by weight of cellulose (dissolved pulp manufactured by Nippon Paper Industries Co., Ltd., degree of polymerization 750, and approx. 3 mm-square sheet), and the two were mixed at 50°C for 4 hours in a nitrogen atmosphere to swell the cellulose. After the mixture was cooled to room temperature, 1.2 equivalent of acetic anhydride relative to the hydroxyl groups per glucose unit of cellulose and 4 parts by weight of sulfuric acid relative to the weight of cellulose were added, followed by 2 hours of stirring at 35°C in a nitrogen atmosphere to cause an esterification reaction. After this, a mixed solution of 100 parts by weight of acetic acid and 33 parts by weight of water was added over 20 minutes as a reaction terminating agent, followed by 1 hour of stirring at 60°C to hydrolyze excess acetic anhydride. Three hundred and thirty-three parts by weight of acetic acid and 100 parts by weight of water were then added, followed by 4 hours of stirring at 60°C to cause a curing reaction. After the reaction was concluded, a 25 wt% aqueous solution containing 6 parts by weight of magnesium acetate was added to precipitate cellulose acetate. After isolating the precipitated cellulose acetate through filtration, a cycle of rinsing with 500 parts by weight of water and filtering was repeated three times, followed by 4 hours of vacuum-drying at 80°C.
The evaluation results for the obtained cellulose acetate in terms of the substituent group, average degree of substitution, weight-average molecular weight, and weight-average degree of polymerization are shown in Table 1.

Synthesis examples 2 to 6

A cellulose ester was synthesized in the same manner as synthesis example 1, except that the degree of polymerization of cellulose, type of esterifying agent and curing conditions were changed as specified in Table 1.
Evaluation results for the obtained cellulose ester in terms of the substituent group, average degree of substitution, weight-average molecular weight and weight-average degree of polymerization are shown in Table 1.

Synthesis example 7

One hundred parts by weight of cellulose (dissolved pulp manufactured by Nippon Paper Industries Co., Ltd., degree of polymerization 750, and approx. 3 mm-square sheet) and 120 parts by weight of a 50 wt% sodium hydroxide aqueous solution were placed in an internal agitation-type autoclave and stirred at 30°C for 15 minutes in a nitrogen atmosphere to alkalify the mixture. One point zero equivalent of methyl chloride relative to the hydroxyl groups per glucose unit of cellulose was then added, followed by 2 hours of stirring at 70°C in a nitrogen atmosphere to cause an etherification reaction. After the reaction was concluded, methyl chloride, a volatile compound, was removed, and the remainder of the reaction mixture was poured into 1000 parts by weight of hot water at 80°C to precipitate methyl cellulose. After isolating the precipitated methyl cellulose through filtration, a cycle of washing with 500 parts by weight of methanol and filtering was repeated three times, followed by 4 hours of vacuum-drying at 80°C.
Evaluation results for the obtained cellulose ether in terms of the substituent group, average degree of substitution, weight-average molecular weight and weight-average degree of polymerization are shown in Table 2.

Synthesis examples 8 and 9

A cellulose ether was synthesized in the same manner as synthesis example 7, except that the degree of polymerization of cellulose, type and equivalent amount of the etherifying agent and etherification conditions were changed as specified in Table 2.

Evaluation results for the obtained cellulose ether in terms of the substituent group, average degree of substitution, weight-average molecular weight and weight-average degree of polymerization are shown in Table 2.

[Table 1]

| | | Synthesis example 1 | Synthesis example 2 | Synthesis example 3 | Synthesis example 4 | Synthesis example 5 | Synthesis example 6 |
|---|---|---|---|---|---|---|---|
| Cellulose | Degree of polymerization | 750 | 750 | 1600 | 950 | 950 | 950 |
| Esterifying agent | Name of chemical compound | Acetic anhydride | Acetic anhydride | Acetic anhydride | Acetic anhydride | Propionic anhydride | Oleic anhydride |
| | Equivalent amount (*) | 1.2 | 1.2 | 1.2 | 1.2 | 1.2 | 1.2 |
| Esterification conditions (reaction temperature and time) | | 35°C, 2 hours | 35°C, 2 hours | 35°C, 2 hours | 35°C, 2 hours | 35°C, 2 hours | 35°C, 2 hours |
| Curing conditions (reaction temperature and time) | | 60°C, 4 hours | 60°C, 6 hours | 80°C, 2 hours | 80°C, 3 hours | 60°C, 8 hours | 80°C, 2 hours |
| Cellulose derivative | Name of chemical compound | Cellulose acetate | Cellulose acetate | Cellulose acetate | Cellulose acetate | Cellulose propionate | Cellulose oleate |
| | Substituent group/Average degree of substitution | Acetyl/2.4 | Acetyl/1.7 | Acetyl/0.4 | Acetyl/0.2 | Propionyl/0.7 | Oleoyl/1.0 |
| | Total degree of substitution | 2.4 | 1.7 | 0.4 | 0.2 | 0.7 | 1.0 |
| | Molecular weight per glucose unit | 263.03 | 233.60 | 178.95 | 170.55 | 201.38 | 426.58 |
| | Weight-average molecular weight ($\times 10^4$) | 14.5 | 13.8 | 21.3 | 10.2 | 15.2 | 31.5 |
| | Weight-average degree of polymerization | 551 | 591 | 1190 | 598 | 755 | 738 |
| *Equivalent amount relative to the hydroxyl groups per glucose unit of cellulose | | | | | | | |

[Table 2]

|  |  | Synthesis example 7 | Synthesis example 8 | Synthesis example 9 |
|---|---|---|---|---|
| Cellulose | Degree of polymerization | 750 | 750 | 350 |
| Esterifying agent | Name of chemical compound | Methyl chloride | Methyl chloride | Methyl chloride/ Ethyl chloride |
|  | Equivalent amount (*) | 1.0 | 0.1 | 1.2/0.5 |
| Esterification conditions (reaction temperature and time) |  | 70°C, 2 hours | 70°C, 2 hours | 90°C, 3 hours |
| Cellulose derivative | Name of chemical compound | Methyl cellulose | Methyl cellulose | Methyl ethyl cellulose |
|  | Substituent group/ Average degree of substitution | Methoxy/1.8 | Methoxy/0.1 | Methoxy/2.1 Ethoxy/0.7 |
|  | Total degree of substitution | 1.8 | 0.1 | 2.8 |
|  | Molecular weight per glucose unit | 187.39 | 163.54 | 211.23 |
|  | Weight-average molecular weight ($\times 10^4$) | 12.4 | 10.3 | 5.2 |
|  | Weight-average degree of polymerization | 662 | 630 | 246 |
| *Equivalent amount relative to the hydroxyl groups per glucose unit of cellulose |  |  |  |  |

Working example 1

The cellulose acetate of synthesis example 1 was used as a cellulose derivative. Five parts by weight of cellulose acetate (degree of substitution of acetyl group 2.4, degree of substitution of hydroxyl groups 0.6 and weight-average degree of polymerization 551), which had been vacuum-dried at 90°C for 12 hours, was added to 100 parts by weight of an ionic liquid (1-butyl-3-methyl imidazolium chloride, manufactured by Aldrich), which had been vacuum-dried at 90°C for 12 hours. Next, 1.5 equivalent of propionic anhydride relative to the residual hydroxyl groups per glucose unit of cellulose acetate was added as an esterifying agent, followed by 2 hours of stirring at 80°C in a nitrogen atmosphere to cause an esterifying reaction. After the reaction was concluded, the reaction liquid mixture was poured into 1500 parts by weight of water to precipitate cellulose acetate propionate. After isolating the precipitated cellulose acetate propionate through filtration, a cycle of rinsing with 100 parts by weight of water and filtering was repeated three times, followed by 8 hours of vacuum-drying at 90°C.

Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 3. The obtained esterification product of a cellulose derivative had a low reduction in the degree of polymerization of 4.5%, thus successfully inhibiting the reduction in the degree of polymerization. Its thermal flowability during molding into a film and color tone were both acceptable.

Working examples 2 to 4

In working examples 2, 3 and 4, the cellulose acetate of synthesis example 2, cellulose acetate of synthesis example 3 and cellulose acetate of synthesis example 4, respectively, were used as a cellulose derivative. Otherwise, an esterification product of a cellulose derivative was synthesized in the same manner as working example 1, except that the type and equivalent amount of the esterifying agent were changed as specified in Table 3.

Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 3. Even when the total degree of substitution of the cellulose derivative as input material was low or the type of the esterifying agent was changed, the reduction in the degree of polymerization was inhibited and therefore acceptable. In addition, each esterification product of a cellulose derivative was acceptable in terms of thermal flowability and color tone. The tendency that the higher the total degree of substitution of the cellulose derivative as input material, the lower the reduction in the degree of polymerization of the obtained esterification product of a cellulose derivative and the better the color tone of the film was observed.

Working examples 5 and 6

In working examples 5 and 6, the cellulose propionate of synthesis example 5 and cellulose oleate of synthesis example 6, respectively, were used as a cellulose derivative. Except that the type and equivalent amount of the esterifying agent were changed as specified in Tables 3 and 4, an esterification product of a cellulose derivative was synthesized in the same manner as working example 1.

Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 3 in the case of working example 5 and Table 4 in the case of working example 6. Even when the type of the substituent group of the cellulose derivative as input material was changed, the reduction in the degree of polymerization was inhibited and therefore acceptable. In addition, each esterification product of a cellulose derivative was acceptable in terms of thermal flowability and color tone.

Working example 7

An esterification product of a cellulose derivative was synthesized in the same manner as working example 1, except that the cellulose acetate propionate obtained in working example 5 was used as a cellulose derivative and that the esterifying agent was changed to butyric anhydride.

Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 4. Even when the cellulose derivative as input material was changed to a cellulose mixed ester, the reduction in the degree of polymerization was inhibited. In addition, the thermal flowability and color tone were both acceptable.

Working examples 8 to 10

In working examples 8, 9 and 10, the methyl cellulose of synthesis example 7, methyl cellulose of synthesis example 8 and methyl ethyl cellulose of synthesis example 9, respectively, were used as a cellulose derivative. Otherwise, an esterification product of a cellulose derivative was synthesized in the same manner as working example 1, except that the type and equivalent amount of the esterifying agent were changed as specified in Table 4.

Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 4. Even when the cellulose derivative as input material was changed to a cellulose ether, the reduction in the degree of polymerization was inhibited and therefore acceptable. In addition, each esterification product of a cellulose derivative was acceptable in terms of thermal flowability and color tone.

Working example 11

An esterification product of a cellulose derivative was synthesized in the same manner as working example 1, except that the methyl cellulose acetate obtained in working example 8 was used as a cellulose derivative and that the equivalent amount of the esterifying agent was changed to 1.1.

Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 5. Even when the cellulose derivative as input material was changed to a cellulose ether ester, the reduction in the degree of polymerization was inhibited and therefore acceptable. In addition, the thermal flowability and color tone were both acceptable.

Working examples 12 and 13

In working examples 12 and 13, the cellulose acetate of synthesis example 1 and cellulose propionate of synthesis example 5, respectively, were used as a cellulose derivative. Otherwise, an esterification product of a cellulose derivative was synthesized in the same manner as working example 1, except that the type and equivalent amount of the esterifying agent and esterification conditions were changed as specified in Table 5.
Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 5. Even when the esterifying agent was changed to a carboxylic acid chloride, the reduction in the degree of polymerization was inhibited and therefore acceptable, despite the fact that hydrochloric acid was generated in the reaction system. In addition, the thermal flowability and color tone were both acceptable.

Working example 14

An esterification product of a cellulose derivative was synthesized in the same manner as working example 1, except that the cellulose propionate of synthesis example 5 was used as a cellulose derivative and that 0.8 equivalent each of acetic anhydride and butyric anhydride was used as esterifying agents.
Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 5. Since two esterifying agents were used in combination, two new types of ester groups were introduced in the esterification product of a cellulose derivative. The reduction in the degree of polymerization was inhibited and was therefore acceptable - as were thermal flowability and color tone.

Working examples 15 to 19

An esterification product of a cellulose derivative was synthesized in the same manner as working example 1, except that the type of ionic liquid, weight of cellulose relative to the ionic liquid and esterification conditions were changed as specified in Tables 5 and 6. In working example 15 to 17, an ionic liquid manufactured by Aldrich was used, while, in working example 18 and 19, an ionic liquid manufactured by Kanto Chemical Co., Inc. was used.
Evaluation results for the obtained esterification product of a cellulose derivative in terms of the substituent group, average degree of substitution, weight-average molecular weight, weight-average degree of polymerization, reduction in the degree of polymerization, thermal flowability and color tone are shown in Table 5 in the case of working example 15 and Table 6 in the case of working examples 16 to 19. In each case, the reduction in the degree of polymerization was inhibited and therefore acceptable, though there was a difference according to the type of ionic liquid or esterification conditions. Each esterification product of a cellulose derivative was acceptable in terms of both thermal flowability and color tone.

Comparative example 1

An esterification product of cellulose was synthesized in the same manner as working example 1, except that the input material was changed from a cellulose derivative to cellulose (dissolved pulp manufactured by Nippon Paper Industries Co., Ltd., degree of polymerization 750, and approx. 3 mm-square sheet).
Evaluation results for the obtained esterification product of cellulose in terms of the substituent group, average degree of substitution, weight-average molecular weight, weight-average degree of polymerization, reduction in the degree of polymerization, thermal flowability and color tone are shown in Table 6. Since the input material was cellulose, the reduction in the degree of polymerization was significant and therefore unacceptable. Similarly, the thermal flowability during molding into a film and color tone were both unacceptable.

[Table 3]

| | | Working example 1 | Working example 2 | Working example 3 | Working example 4 | Working example 5 |
|---|---|---|---|---|---|---|
| Cellulose derivative | Name of chemical compound | Cellulose acetate | Cellulose acetate | Cellulose acetate | Cellulose acetate | Cellulose propionate |
| | Substituent group/Average degree of substitution | Acetyl/2.4 | Acetyl/1.7 | Acetyl/0.4 | Acetyl/0.2 | Propionyl/0.7 |
| | Total degree of substitution | 2.4 | 1.7 | 0.4 | 0.2 | 0.7 |
| | Molecular weight per glucose unit | 263.03 | 233.60 | 178.95 | 170.55 | 201.38 |
| | Weight-average molecular weight ($\times 10^4$) | 14.5 | 13.8 | 21.3 | 10.2 | 15.2 |
| | Weight-average degree of polymerization | 551 | 591 | 1190 | 598 | 755 |
| Ionic liquid | Name of chemical compound | 1-butyl-3-methyl imidazolium chloride | 1-butyl-3-methyl imidazolium chloride | 1-butyl-3-methyl imidazolium chloride | 1-butyl-3-methyl imidazolium chloride | 1-butyl-3-methyl imidazolium chloride |
| Cellulose derivative/Ionic liquid (wt%) | | 5 | 5 | 5 | 5 | 5 |
| Esterifying agent | Name of chemical compound | Propionic anhydride | Butyric anhydride | Stearic anhydride | Propionic anhydride | Acetic anhydride |
| | Equivalent amount (*) | 1.5 | 1.2 | 0.5 | 1.5 | 1.0 |
| Esterification conditions (reaction temperature and time) | | 80°C, 2 hours | 80°C, 2 hours | 80°C, 2 hours | 80°C, 2 hours | 80°C, 2 hours |

(continued)

| | | Working example 1 | Working example 2 | Working example 3 | Working example 4 | Working example 5 |
|---|---|---|---|---|---|---|
| Esterification product of cellulose derivative | Name of chemical compound | Cellulose acetate propionate | Cellulose acetate butyrate | Cellulose acetate stearate | Cellulose acetate propionate | Cellulose acetate propionate |
| | Substituent group/Average degree of substitution | Acetyl/2.4 Propionyl/0.5 | Acetyl/1.7 Butyryl/0.8 | Acetyl/0.4 Stearoyl/0.8 | Acetyl/0.2 Propionyl/2.7 | Acetyl/2.0 Propionyl/0.7 |
| | Total degree of substitution | 2.9 | 2.5 | 1.2 | 2.9 | 2.7 |
| | Molecular weight per glucose unit | 291.06 | 289.67 | 392.12 | 321.91 | 285.46 |
| | Weight-average molecular weight ($\times 10^4$) | 15.3 | 15.6 | 38.6 | 15.5 | 19.1 |
| | Weight-average degree of polymerization | 526 | 539 | 984 | 481 | 670 |
| | Reduction in degree of polymerization (%)/ Inhibiting of the reduction in the degree of polymerization | 4.5/◎ | 8.7/◎ | 17.3/○ | 19.5/○ | 11.2/○ |
| | Film diameter (cm)/Thermal flowability | 7.8/◎ | 8.2/○ | 6.4/○ | 8.8/○ | 7.5/◎ |
| | YI/Color tone | 4.4/◎ | 4.9/◎ | 8.3/○ | 8.7/○ | 4.7/◎ |

*Equivalent amount relative to the residual hydroxyl groups per glucose unit of cellulose derivative

[Table 4]

| | | Working example 6 | Working example 7 | Working example 8 | Working example 9 | Working example 10 |
|---|---|---|---|---|---|---|
| Cellulose derivative | Name of chemical compound | Cellulose oleate | Cellulose acetate propionate | Methyl cellulose | Methyl cellulose | Methyl ethyl cellulose |
| | Substituent group/Average degree of substitution | Oleoyl/1.0 | Acetyl/2.0 Propionyl/0.7 | Methoxy/1.8 | Methoxy/0.1 | Methoxy/2.1 Ethoxy/0.7 |
| | Total degree of substitution | 1.0 | 2.7 | 1.8 | 0.1 | 2.8 |
| | Molecular weight per glucose unit | 426.58 | 285.46 | 187.39 | 163.54 | 211.23 |
| | Weight-average molecular weight ($\times 10^4$) | 31.5 | 19.1 | 12.4 | 10.3 | 5.2 |
| | Weight-average degree of polymerization | 738 | 670 | 662 | 630 | 246 |
| Ionic liquid | Name of chemical compound | 1-butyl-3-methyl imidazolium chloride | 1-butyl-3-methyl imidazolium chloride | 1-butyl-3-methyl imidazolium chloride | 1-butyl-3-methyl imidazolium chloride | 1-butyl-3-methyl imidazolium chloride |
| Cellulose derivative/Ionic liquid (wt%) | | 5 | 5 | 5 | 5 | 5 |
| Esterifying agent | Name of chemical compound | Acetic anhydride | Butyric anhydride | Acetic anhydride | Propionic anhydride | Acetic anhydride |
| | Equivalent amount (*) | 0.5 | 1.5 | 0.8 | 1.5 | 1.2 |
| Esterification conditions (reaction temperature and time) | | 80°C, 2 hours | 80°C, 2 hours | 80°C, 2 hours | 80°C, 2 hours | 80°C, 2 hours |

(continued)

| | | Working example 6 | Working example 7 | Working example 8 | Working example 9 | Working example 10 |
|---|---|---|---|---|---|---|
| Esterification product of cellulose derivative | Name of chemical compound | Cellulose acetate oleate | Cellulose acetate propionate butyrate | Methyl cellulose acetate | Methyl cellulose propionate | Methyl ethyl cellulose acetate |
| | Substituent group/Average degree of substitution | Acetyl/0.8 Oleoyl/1.0 | Acetyl/2.0 Propionyl/0.7 Butyryl/0.3 | Methoxy/1.8 Acetyl/0.7 | Methoxy/0.1 Propionyl/2.7 | Methoxy/2.1 Ethoxy/0.7 Acetyl/0.2 |
| | Total degree of substitution | 1.8 | 3.0 | 2.5 | 2.8 | 3.0 |
| | Molecular weight per glucose unit | 460.20 | 306.48 | 216.81 | 314.91 | 219.64 |
| | Weight-average molecular weight ($\times 10^4$) | 30.7 | 19.7 | 13.1 | 15.9 | 5.1 |
| | Weight-average degree of polymerization | 668 | 642 | 606 | 505 | 233 |
| | Reduction in degree of polymerization (%)/Inhibiting of the reduction in the degree of polymerization | 9.6/◎ | 4.1/◎ | 8.4/◎ | 19.8/○ | 5.2/◎ |
| | Film diameter (cm)/Thermal flowability | 8.7/○ | 8.3/○ | 7.9/◎ | 8.7/○ | 8.8/○ |
| | YI/Color tone | 9.6/○ | 5.3/○ | 5.8/○ | 8.1/○ | 7.5/○ |

*Equivalent amount relative to the residual hydroxyl groups per glucose unit of cellulose derivative

[Table 5]

| | | Working example 11 | Working example 12 | Working example 13 | Working example 14 | Working example 15 |
|---|---|---|---|---|---|---|
| Cellulose derivative | Name of chemical compound | Methyl cellulose acetate | Cellulose acetate | Cellulose propionate | Cellulose propionate | Cellulose acetate |
| | Substituent group/Average degree of substitution | Methoxy/1.8 Acetyl/0.7 | Acetyl/2.4 | Propionyl/0.7 | Propionyl/0.7 | Acetyl/2.4 |
| | Total degree of substitution | 2.5 | 2.4 | 0.7 | 0.7 | 2.4 |
| | Molecular weight per glucose unit | 216.81 | 263.03 | 201.38 | 201.38 | 263.03 |
| | Weight-average molecular weight ($\times 10^4$) | 13.1 | 14.5 | 15.2 | 15.2 | 14.5 |
| | Weight-average degree of polymerization | 606 | 551 | 755 | 755 | 551 |
| Ionic liquid | Name of chemical compound | 1-butyl-3-methyl imidazolium chloride | 1-butyl-3-methyl imidazolium chloride | 1-butyl-3-methyl imidazolium chloride | 1-butyl-3-methyl imidazolium chloride | 1-ethyl-3-methyl imidazolium chloride |
| Cellulose derivative/Ionic liquid (wt%) | | 5 | 5 | 5 | 5 | 10 |
| Esterifying agent | Name of chemical compound | Propionic anhydride | Acetyl chloride | Decyl chloride | Acetic anhydride/ Butyric anhydride | Propionic anhydride |
| | Equivalent amount (*) | 1.1 | 1.1 | 1.1 | 0.8/0.8 | 1.5 |
| Esterification conditions (reaction temperature and time) | | 80°C, 2 hours | 80°C, 0.5 hour | 80°C, 1 hour | 80°C, 2 hours | 80°C, 4 hours |

**EP 2 692 738 A1**

(continued)

| | | Working example 11 | Working example 12 | Working example 13 | Working example 14 | Working example 15 |
|---|---|---|---|---|---|---|
| Esterification product of cellulose derivative | Name of chemical compound | Methyl cellulose acetate propionate | Cellulose acetate | Cellulose propionate decanoate | Cellulose acetate propionate butyrate | Cellulose acetate propionate |
| | Substituent group/Average degree of substitution | Methoxy/1.8 Acetyl/0.7 Propionyl/0.4 | Acetyl/3.0 | Propionyl/0.7 Decanoyl/2.3 | Acetyl/1.7 Propionyl/0.7 Butyryl/0.4 | Acetyl/2.4 Propionyl/0.5 |
| | Total degree of substitution | 2.9 | 3.0 | 3.0 | 2.8 | 2.9 |
| | Molecular weight per glucose unit | 239.24 | 288.25 | 556.14 | 300.88 | 291.06 |
| | Weight-average molecular weight ($\times 10^4$) | 13.4 | 14.4 | 35.6 | 20.3 | 14.5 |
| | Weight-average degree of polymerization | 561 | 500 | 641 | 674 | 499 |
| | Reduction in degree of polymerization (%)/Inhibiting of the reduction in the degree of polymerization | 7.2/◎ | 9.3/◎ | 15.1/○ | 10.7/○ | 9.4/◎ |
| | Film diameter (cm)/Thermal flowability | 8.3/○ | 7.7/◎ | 8.9/○ | 8.0/○ | 7.9/◎ |
| | YI/Color tone | 6.3/○ | 6.0/○ | 6.5/○ | 5.2/○ | 5.3/○ |

*Equivalent amount relative to the residual hydroxyl groups per glucose unit of cellulose derivative

21

[Table 6]

|  |  | Working example 16 | Working example 17 | Working example 18 | Working example 19 | Comparative example 1 |
|---|---|---|---|---|---|---|
| Cellulose derivative or cellulose | Name of chemical compound | Cellulose acetate | Cellulose acetate | Cellulose acetate | Cellulose acetate | Cellulose |
|  | Substituent group/Average degree of substitution | Acetyl/2.4 | Acetyl/2.4 | Acetyl/2.4 | Acetyl/2.4 | - |
|  | Total degree of substitution | 2.4 | 2.4 | 2.4 | 2.4 | 0.0 |
|  | Molecular weight per glucose unit | 263.03 | 263.03 | 263.03 | 263.03 | 162.14 |
|  | Weight-average molecular weight ($\times 10^4$) | 14.5 | 14.5 | 14.5 | 14.5 | - |
|  | Weight-average degree of polymerization | 551 | 551 | 551 | 551 | 750 |
| Ionic liquid | Name of chemical compound | 1-allyl-3-methyl imidazolium chloride | 1-ethyl-3-methyl imidazolium acetate | 1-butyl-3-methyl pyridinium chloride | 1-butylpyridinium hexafluorophosphate | 1-butyl-3-methyl imidazolium chloride |
| Cellulose derivative/Ionic liquid (wt%) |  | 15 | 25 | 4 | 2 | 5 |
| Esterifying agent | Name of chemical compound | Propionic anhydride | Propionic anhydride | Propionic anhydride | Propionic anhydride | Propionic anhydride |
|  | Equivalent amount (*) | 1.5 | 1.5 | 1.5 | 1.5 | 1.5 |
| Esterification conditions (reaction temperature and time) |  | 60°C, 9 hours | 70°C, 7 hours | 90°C, 2 hours | 100°C, 1 hour | 80°C, 2 hours |

(continued)

| | | Working example 16 | Working example 17 | Working example 18 | Working example 19 | Comparative example 1 |
|---|---|---|---|---|---|---|
| Esterification product of cellulose derivative or cellulose | Name of chemical compound | Cellulose acetate propionate | Cellulose acetate propionate | Cellulose acetate propionate | Cellulose acetate propionate | Cellulose propionate |
| | Substituent group/Average degree of substitution | Acetyl/2.4 Propionyl/0.4 | Acetyl/2.4 Propionyl/0.5 | Acetyl/2.4 Propionyl/0.5 | Acetyl/2.4 Propionyl/0.3 | Propionyl/2.7 |
| | Total degree of substitution | 2.8 | 2.9 | 2.9 | 2.7 | 2.7 |
| | Molecular weight per glucose unit | 285.45 | 291.06 | 291.06 | 279.85 | 313.51 |
| | Weight-average molecular weight ($\times 10^4$) | 14.8 | 14.8 | 13.1 | 12.4 | 13.8 |
| | Weight-average degree of polymerization | 517 | 509 | 451 | 444 | 440 |
| | Reduction in degree of polymerization (%)/ Inhibiting of the reduction in the degree of polymerization | 6.2/◎ | 7.7/◎ | 18.1/○ | 19.5/○ | 41.3/× |
| | Film diameter (cm)/Thermal flowability | 7.6/◎ | 7.8/◎ | 8.2/○ | 8.0/○ | 9.1/△ |
| | YI/Color tone | 4.7/◎ | 4.9/◎ | 6.4/○ | 6.7/○ | 15.2/× |

*Equivalent amount relative to the residual hydroxyl groups per glucose unit of cellulose or cellulose derivative

Industrial Applicability

The esterification product of a cellulose derivative of the present invention is excellent in thermal flowability during molding and color tone with only a inhibited reduction in the degree of polymerization. For this reason, it can be advantageously used in wide ranging fields, including fiber, film and plastics.
All publications, patents and patent applications cited in the present description shall be wholly incorporated thereinto as reference material.

**Claims**

1.  A manufacturing method for an esterification product of a cellulose derivative **characterized by** comprising esterification of a cellulose derivative in a mixture of an ionic liquid, cellulose derivative and esterifying agent that is at least one selected from the group consisting of carboxylic anhydride, carboxylic acid halide, and carboxylic acid.

**2.** A manufacturing method for an esterification product of a cellulose derivative as described in claim 1 **characterized in that** the cellulose derivative is a cellulose ester.

**3.** A manufacturing method for an esterification product of a cellulose derivative as described in either claim 1 or 2 **characterized in that** the cellulose derivative is cellulose acetate.

**4.** A manufacturing method for an esterification product of a cellulose derivative as described in any of claims 1 to 3 **characterized in that** the esterifying agent is acetic anhydride, propionic anhydride, or butyric anhydride.

**5.** A manufacturing method for an esterification product of a cellulose derivative as described in any of claims 1 to 4 **characterized in that** a cation that forms part of the ionic liquid is either an imidazolium cation or pyridinium cation.

**6.** A manufacturing method for an esterification product of a cellulose derivative as described in any of claims 1 to 5 **characterized in that** an anion that forms part of the ionic liquid is either a halogen anion or carboxylic acid anion.

**7.** An esterification product of a cellulose derivative manufactured using a manufacturing method as described in any of claims 1 to 6, wherein the esterification product of a cellulose  derivative satisfies inequality (I) below, where DP (A) and DP(B) are the weight-average degree of polymerization of the cellulose derivative and the esterification product of the cellulose derivative, respectively:

$$(DP(A) - DP(B))/DP(A) \times 100 \leq 20 \qquad (I).$$

**8.** An esterification product of a cellulose derivative as described in claim 7 **characterized by** being in the form of cellulose acetate propionate or cellulose acetate butyrate.

<div style="text-align:center">**INTERNATIONAL SEARCH REPORT**</div>

| | International application No. |
|---|---|
| | PCT/JP2012/057056 |

**A.  CLASSIFICATION OF SUBJECT MATTER**
*C08B3/12(2006.01)i*

According to International Patent Classification (IPC) or to both national classification and IPC

**B.  FIELDS SEARCHED**

Minimum documentation searched (classification system followed by classification symbols)
C08B3/12

Documentation searched other than minimum documentation to the extent that such documents are included in the fields searched
Jitsuyo Shinan Koho            1922-1996    Jitsuyo Shinan Toroku Koho    1996-2012
Kokai Jitsuyo Shinan Koho    1971-2012    Toroku Jitsuyo Shinan Koho    1994-2012

Electronic data base consulted during the international search (name of data base and, where practicable, search terms used)
JSTPlus/JMEDPlus/JST7580(JDreamII), CAplus(STN), REGISTRY(STN)

**C.  DOCUMENTS CONSIDERED TO BE RELEVANT**

| Category* | Citation of document, with indication, where appropriate, of the relevant passages | Relevant to claim No. |
|---|---|---|
| X<br>Y | WO 2010/100126 A1 (FRAUNHOFER-GESELLSCHAFT ZUR FÖRDERUNG DER ANGEWANDTEN FORSCHUNG E. V.), 10 September 2010 (10.09.2010), particularly, example 12 & DE 102009012161 A    & DE 102009012161 A1 | 1-2,4-7<br>3,8 |
| X<br>Y | ZHANG J, et al., Synthesis of cellulose benzoates under homogeneous conditions in an ionic liquid, Cellulose, 2009, vol.16, no.2, p.299-308 | 1-2,4-7<br>3,8 |

☒  Further documents are listed in the continuation of Box C.        ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 April, 2012 (18.04.12) | 01 May, 2012 (01.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2012/057056 |

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2010-518245 A (Eastman Chemical Co.),<br>27 May 2010 (27.05.2010),<br>entire text; particularly, each example<br>& JP 2010-518166 A       & JP 2010-518244 A<br>& US 2008/0194808 A1    & US 2008/0194834 A1<br>& US 2008/0194807 A1    & US 2010/0029927 A1<br>& EP 2118143 A          & EP 2121766 A<br>& EP 2118070 A          & EP 2313439 A<br>& WO 2008/100569 A1     & WO 2008/100566 A1<br>& WO 2008/100577 A1 | 3,8 |
| Y | HUANG K, et al., Homogeneous synthesis of cellulose stearates with defferent degrees of substitution in ionic liquid 1-butyl-3-methylimidazolium chloride, Carbohydrate Polymers, 2011.02.01, vol.83, no.4, p.1631-1635 | 3,8 |
| Y | WU J, et al., Homogeneous Acetylation of Cellulose in a New Ionic Liquid, Biomacromolecules, 2004, vol.5, no.2, p.266-268 | 3,8 |
| Y | PENG XW, et al., Homogeneous Esterification of Xylan-Rich Hemicelluloses with Maleic Anhydride in Ionic Liquid, Biomacromolecules, 2010, vol.11, no.12, p.3519-3524 | 3,8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003029329 A

- JP 2008266625 A

**Non-patent literature cited in the description**

- Acetic Acid Fiber - Its Manufacture and Utilization. Maruzen Co., Ltd, 10 May 1953

- *Macromol. Biosci.,* 2005, vol. 5, 520-525